# EUROPEAN PATENT SPECIFICATION

(11) **EP 1 980 599 B1**
(45) Date of publication and mention of the grant of the patent: **11.08.2010**
(21) Application number: 08290015.0
(22) Date of filing: 09.01.2008
(51) Int. Cl.: C09D 11/00

(54) **Dye discharging ink for inkjet printing**
Färbemittel abbauende Tinte zum Tintenstrahldrucken
Encre à décharge de colorant pour impression à jet d'encre

(30) Priority: 09.04.2007 JP 2007101674
(43) Date of publication of application: 15.10.2008
(73) Proprietor: Mimaki Engineering Co., Ltd., Tomi-shi, Nagano 389-0512 (JP)
(72) Inventor: Souma, Seiichi, c/o Mimaki Engineering Co., Ltd., Tomi-city Nagano (JP); Tsubamoto, Satoshi, c/o Mimaki Engineering Co. Ltd., Tomi-city Nagano (JP); Tabayashi, Isao, c/o Mimaki Engineering Co., Ltd., Tomi-city Nagano (JP)
(74) Representative: Uchida, Kenji

(56) References cited:
- US-A- 4 252 845
- US-A- 4 413 266
- US-A- 5 549 742
- US-A1- 2005 158 471
- US-A1- 2005 287 356
- US-A1- 2007 017 413

## Description

The present invention relates to a dye discharging ink for inkjet printing (discharging liquid for inkjet printing).

As dye discharging ink for inkjet printing, there is conventionally known dye discharging ink for inkjet printing employing a reducing agent, especially a sulphur reducing agent (for example, JP-A-63-21990). The dye discharging ink for inkjet printing employing a sulphur reducing agent, among other reducing agent, is excellent for decolorization of azo dyes.

However, conventional dye discharging ink for inkjet printing using a reducing agent, especially a sulphur reducing agent, has a problem that acidic substances such as sulfate ion and/or carboxylic acid are produced due to changes over time such as decomposition, oxidization, and volatilization, thus damaging an outer layer and an intermediate layer of an inkjet head.

In addition, a chelator and/or a surface active surfactant are added together with the reducing agent (for example JP-A-2004-143621) to prevent unevenness in decolorization. In case of inkjet printing, however, the chelator or the surface active surfactant damages the outer layer of the head. As a result, positions of the outer layer around nozzles and a nozzle plate are damaged under continuous use, thus resulting in interference with the linear advancing property of ejected ink. In case of an apparatus with a wiping function for wiping away dew drips which are produced due to volatile components of solvent on the surface of the nozzle plate, the damage of the nozzle plate worsens because of additional applying of physical damage by the wiping function.

Further, dye discharging ink for inkjet printing using a sulphur reducing agent, among other reducing agents, has a problem that the dye discharging capability is reduced because the decomposition of the reducing agent progresses due to hydrolysis when stored over a long period of time.

The present invention has been made in consideration of the aforementioned problems and it is an object of the present invention to provide a dye discharging ink for inkjet printing capable of inhibiting corrosion of material for the head nozzles due to acidic substances produced by decomposition of the reducing agent, especially the sulphur reducing agent, thereby reducing inhibition of linear advancing property of ejected ink. In addition, it is another object of the present invention to provide a dye discharging ink for inkjet printing capable of decreasing damage of an ejection surface of an inkjet head caused by physical damage from a wiping mechanism on the ejection surface of the inkjet head (surface of a nozzle plate), thereby decreasing inhibition of linear advancing property of ejected ink.

Further, it is another object of the present invention to provide a dye discharging ink for inkjet printing capable of preventing "decrease in dye discharging capability due to decomposition of a reducing agent" caused by hydrolysis of the reducing agent, especially a sulphur reducing agent.

The present invention provides a dye discharging ink for inkjet printing containing at least a reducing agent and an amine compound.

In the aforementioned present invention, there is provided a dye discharging ink for inkjet printing, wherein said reducing agent is a sulphur reducing agent.

In the aforementioned present invention, there is provided a dye discharging ink for inkjet printing, wherein said sulphur reducing agent is Rongalit.

In the aforementioned present invention, there is provided a dye discharging ink for inkjet printing, wherein said amine compound is an alcohol amine compound.

In the aforementioned present invention, there is a dye discharging ink for inkjet printing, wherein the pH of the dye discharging ink is in a range from 9.5 to 11.0.

In the aforementioned present invention, there is provided a dye discharging ink for inkjet printing, containing at least Rongalit as said reducing agent and triethanolamine as said amine compound.

A dye discharging ink for inkjet printing according to the present invention prevents damage of an inkjet head due to a sulphur reducing agent and/or another factor, thereby enabling stable ejection of the discharging ink even when continuously used over a long period of time and maintaining its discharging capability over a long period of time.

The above, and the other objects, features and advantages of the present invention will be made apparent from the following description of the preferred embodiments, given as non-limiting examples.

A dye discharging ink for inkjet printing of the present invention is characterized in that at least a reducing agent and an amine compound are contained to coexist in a discharging liquid.

The coexistence of the reducing agent and the amine compound in the discharging liquid according to the present invention enables prevention of corrosion of material for head nozzles due to acidic substances produced by decomposition of the reducing agent, especially the sulphur reducing agent and enables decrease in damage of an ejection surface of an inkjet head caused by physical damage from a wiping mechanism on the surface of the inkjet head. This can decrease inhibition of linear advancing property of ejected dye discharging ink.

The coexistence of the reducing agent and the amine compound in the discharging liquid according to the present invention also enables prevention of decrease in the discharging capability due to the decomposition of the reducing agent caused by hydrolysis of the reducing agent, especially the sulphur reducing agent.

In the dye discharging ink for inkjet printing of the present invention, the reducing agent and the amine compound are preferably contained to coexist in the discharging liquid in such quantities as to exhibit at least one of the aforementioned works and effects and, more preferably contained to coexist in the discharging liquid in such quantities as to exhibit both of the aforementioned works and effects.

In the present invention, examples of the aforementioned reducing agent include sulphur reducing agents such as sodium dithionite [hydrosulfite (Na₂S₂O₄)], Rongalit C (NaHSO₂· CH₂O· H₂O), Rongalit Z (ZnSO₂· CH₂O· H₂O), Decroline (Zn(HSO₂· CH₂O)₂), sulfinic acids like thiourea dioxide, sodium hydrogen sulfite, and sodium thiosulfate and non-sulphur reducing agents having bleaching effect under acidic environment such as stannous chloride (SnCl₂· 2H₂O) and sodium chlorite, and non-sulphur reducing agents which are unstable when it is alone or in aqueous solution.

The present invention is preferably applied to a case using a sulphur reducing agent because the aforementioned problems would be serious when using a sulphur reducing agent.

In the present invention, it is preferable to used Rongalit as the sulphur reducing agent, because even a small amount of Rongalit can exhibit high discharging effect.

In the present invention, adding the amine compound (especially, alcoholic amines) to the sulphur reducing agent leads to the following effects:
an effect of neutralizing acidic substances (sulfinic acid carboxylic acid) produced by hydrolysis and/or oxidization of the sulphur reducing agent;
an effect of maintaining the pH alkali so as to prevent the deterioration of the reducing agent due to the hydrolysis of the sulphur reducing agent during long term storage because the hydrolysis of the sulphur reducing agent advances at an accelerating pace when the pH is lowered; and
an effect of protecting the head material, because the amine compound is coordinated on the head material, especially metallic compositions.
In the dye discharging ink for inkjet printing of the present invention, the amine compound and the sulphur reducing agent are mixed preferably in such an extent to substantially finding exhibition of the aforementioned effects (1) through (3) and, more preferably in such an extent to effectively exhibits the aforementioned effects (1) through (3).

In the present invention, examples of the amine compound include aliphatic amines such as isopropylamine, n-hexylamine, didecylamine, dioctylamine, and tri-n-octylamine, aromatic amines, and alcohol amines such as triethanolamine.

In the present invention, it is preferable to use an alcohol amine as the amine because it can greatly exhibit the aforementioned effects (1) through (3) and because it has no metallic ion like NaOH so as to cause less color bleed due to recombination between metallic ion and dye which is decomposed during discharge printing.

In the present invention, it is preferable to use triethanolamine as the alcohol amine because it can further greatly exhibit the aforementioned effects (1) through (3) and because it has no metallic ion like NaOH so as to cause less color bleed due to recombination between metallic ion and dye which is decomposed during discharge printing.

In the dye discharging ink for inkjet printing of the present invention, water only or preferably a mixture of water and an organic solvent may be used as the medium of the discharging liquid. Examples of the organic solvent include ethylene glycol systems (for example, diethylene glycol) and pyrrolidones (for example, N-methyl pyrrolidone).

In the dye discharging ink for inkjet printing of the present invention, other components to be added may be a surface active surfactant (such as, acetylene derivative/nonionic surfactant) and/or an antirust agent.

The dye discharging ink for inkjet printing of the present invention preferably contains three components, i.e. a reducing agent, an amine compound, and a surface active surfactant, and more preferably contains three components, a sulphur reducing agent (for example, Rongalit), an alcohol amine (for example, triethanolamine), and a surface active surfactant ( for example, Surfynol).

Examples of the dye discharging ink for inkjet printing of the present invention include a discharging liquid for inkjet printing containing no colorants such as dye or pigment. The discharging liquid for inkjet printing is used as a "discharging liquid containing a discharging agent" of a two-component type comprising the discharging liquid containing a discharging agent and an ink containing dye or pigment which are ejected from separate nozzles to print. There are the following forms:
discharging liquid containing a discharging agent + non-dye ink (pigment ink) [two-component type]
discharging liquid containing a discharging agent + dye ink (reducing-retardant dye) [two-component type]
Examples of the dye discharging ink for inkjet printing of the present invention include a discharging liquid for inkjet printing of a one-component type which contains colorants such as dye or pigment and is used as an ink to be ejected from a nozzle. There are the following forms. The one-component type is used for so-called colored discharge printing in which coloring is conducted at the same time as discharge printing.
discharging agent + non-dye ink (pigment ink) [one-component type]
discharging agent + dye ink (reducing-retardant dye) [one-component type]

In the dye discharging ink for inkjet printing of the present invention, an especially preferable mixing ratio in the form (A) of the "discharging liquid containing a discharging agent" of the two-component type is a discharging liquid composition containing 6-10 weight % Rongalit as the sulphur reducing agent and 3-7 weight % triethanolamine, for example. The hydrogen ion concentration of the discharging liquid is preferably in a range of from pH 9.5 to pH 11.0.

This discharging liquid composition is for illustrative purposes. The amount of the amine compound may be increased or decreased according to the increase or decrease of the amount of Rongalit. The present invention is not limited to the above composition.

### (Examples)

The present invention will be more specifically described with reference to examples as listed below. The present invention is not limited to these examples.

The following comparison tests (I) and (II) were conducted as to a dye discharging ink for inkjet printing of the present invention and a discharging ink as a comparative example.
Comparison test for effect of preventing damage to inkjet head, and
Comparison test for effect of maintaining the discharging capability.

The discharging inks used in the comparison tests have compositions [A], [B] as follows:
[A] : Composition of the discharging ink as an example of the present invention

| | |
|---|---|
| Rongalit | 6 weight % |
| Triethanolamine | 5 weight % |
| Nonionic surfactant | 6 weight % |
| Anticorrosion agent | 0.05 weight % |
| Benzotriazole | 0.05 weight % |
| Diethylene glycol | 15.0 weight % |
| N-methyl-2-pyrrolidone | 5 weight % |
| Diethylene glycol monomethyl ether Waterremnant | 5 weight % |

Hydrogen ion concentration of discharging liquid: pH 10.5
[B] : Composition of the discharging ink as a comparative example

| | |
|---|---|
| Rongalit | 6 weight % |
| Sodium bicarbonate | 1 weight % |
| Sodium nitrilotriacetic acid (NTA) | 1 weight % |
| Nonionic surfactant | 6 weight % |
| Anticorrosion agent | 0.05 weight % |
| Benzotriazole | 0.05 weight % |
| Diethylene glycol | 15.0 weight % |
| N-methyl-2-pyrrolidone | 5 weight % |
| Diethylene glycol monomethyl ether Waterremnant | 5 weight % |

Hydrogen ion concentration of discharging liquid: pH 9.5

### (I) Comparison test for effect of preventing damage to inkjet head

### (Test details)

Respective inkjet heads (each having a wiping mechanism on the head surface) are filled with the discharging inks for inkjet printing of the aforementioned compositions [A], [B], respectively. Then, the comparison test was conducted under the following conditions.

For the test, an inkjet printer having a discharge printing function (for example, JV4 available from Mimaki Engineering Co., Ltd.) was used.
Periodical wiping operation for wiping the surface of the nozzle plate every 8 hours was conducted for a month. During this, the inkjet head remained untouched without printing for a month in a state that the inkjet head is filled with the discharging ink for inkjet printing.
After a month, the corrosion (damage) on the surface around the head nozzles was observed by using a microscope. A significant amount of corrosion (damage) was observed in case of using the conventional discharging ink [B], while the corrosion (damage) was significantly prevented in case of using the ink [A] of the present invention.
Test printing by using an inkjet printer (JV4 available from Mimaki Engineering Co., Ltd.) in which the discharging ink for inkjet printing was ejected from nozzles to print a nozzle check pattern was conducted periodically (for example, every day). Deflection occurred after one week or the like under the continuous operating condition in case of using the conventional discharging ink [B], while the anti-damage performance for three weeks under the continuous operating condition was achieved in case of using the discharging ink [A] according to the present invention.

### (II) Test for effect of maintaining the discharging capability (Test details)

The following treatments 1) through 4) were conducted using the discharging inks for inkjet printing of the aforementioned compositions [A], [B], respectively.

For the test, an inkjet printer having a discharge printing function (for example, GP-604D available from Mimaki Engineering Co., Ltd.) was used.
Discharging ink keeping condition: discharging inks which were kept (left) in an environment of 60 °C for zero hour, three weeks, and four weeks were used.
Printing: printing (720 dpi x 720 dpi) by the inkjet printer, one-way printing, 2-pass 1-coat, 100% print density.
Discharge printing: after discharge printing on a black colored T-shirt with the discharging liquid under the aforementioned condition 2), the discharged portion was treated by hot press at 160 °C for 60 seconds.
Color-difference measurement: color difference (ΔE) between the non-discharged portion and the discharged portion was measured by a spectrodensitometer (X-Rite 500 series available from X-Rite, Incorporated).

### (Evaluation)

After keeping (leaving) the discharging inks under the aforementioned conditions, the discharge printing was conducted. Resultant color differences (ΔE) were compared between the cases using the discharging liquids [A], [B]. The comparison results are shown in Table 1.

**[Table 1]**

| Period for leaving inks at 60 °C | 0 day | 3 weeks | 4 weeks | Rate of change (4 weeks/0 day) |
|---|---|---|---|---|
| Discharging ink [A] of the invention | 25.00 | 24.82 | 25.27 | 101% |
| Discharging ink [B] as a comparative example | 30.5 | 30.3 | 17.3 | 56% |

| | | | | |
|---|---|---|---|---|
| Unit of color difference (ΔE): NBS unit | | | | |

As a result, as for the discharging liquid [A] of the present invention, there are little changes in the color difference (ΔE) between the non-discharged portion and the discharge portion from a case using the discharging liquid left for zero day to a case using the discharging liquid left for four weeks in the environment of 60 °C. That is, the discharging capability did not deteriorate even after left in the environment of 60 °C for four weeks. This means that the discharging liquid [A] of the present invention can be stored with stably keeping the discharging capability over a long period of time.

As for the discharging liquid [B], the discharging capability was decreased by half after left for four weeks.

As apparent also from the aforementioned examples, the dye discharging ink for inkjet printing of the present invention can prevent head damage due to the sulphur reducing agent and another factor, thereby enabling stable ejection of the discharging ink even when continuously used over a long period of time and keeping its discharging capability over a long period of time.

## Claims

1. An inkjet head for an inkjet printer comprising a nozzle plate and containing a dye discharging ink for inkjet printing, said dye discharging ink for inkjet printing containing at least a reducing agent and an amine compound.

2. An inkjet head according to claim 1, wherein said reducing agent is a sulphur reducing agent.

3. An inkjet head according to claim 2, wherein said sulphur reducing agent is Rongalit.

4. An inkjet head according to any one of claims 1 to 3, wherein said amine compound is an alcohol amine compound.

5. An inkjet head according to any one of claims 1 to 4, wherein the pH of the dye discharge ink is in a range from 9.5 to 11.0.

6. An inkjet head according to any one of claims 1 to 5, containing at least Rongalit as said reducing agent and triethanolamine as said amine compound.

7. An inkjet head according to any one of claims 1 to 6, wherein said head further comprises a wiping mechanism of the head surface.

## Patentansprüche

1. Tintenstrahlkopf für einen Tintenstrahldrucker, umfassend eine Düsenplatte und enthaltend eine Farbstoff-beseitigende Tinte zum Tintenstrahldrucken, wobei die Farbstoff-beseitigende Tinte zum Tintenstrahldrucken mindestens ein Reduktionsmittel und eine Aminverbindung enthält.

2. Tintenstrahlkopf nach Anspruch 1, wobei das Reduktionsmittel ein Schwefelreduktionsmittel ist.

3. Tintenstrahlkopf nach Anspruch 2, wobei das Schwefelreduktionsmittel Rongalit ist.

4. Tintenstrahlkopf nach einem der Ansprüche 1 bis 3, wobei die Aminverbindung eine Alkoholaminverbindung ist.

5. Tintenstrahlkopf nach einem der Ansprüche 1 bis 4, wobei der pH-Wert der Farbstoff-beseitigenden Tinte in einem Bereich von 9,5 bis 11,0 liegt.

6. Tintenstrahlkopf nach einem der Ansprüche 1 bis 5, wobei mindestens Rongalit als das Reduktionsmittel und Triethanolamin als die Aminverbindung enthalten sind.

7. Tintenstrahlkopf nach einem der Ansprüche 1 bis 6, wobei der Kopf weiter einen Wischmechanismus der Kopfoberfläche umfasst.

## Revendications

1. Tête à jet d'encre pour une imprimante à jet d'encre comprenant une plaque d'injection et contenant une encre libérant un colorant pour impression par jet d'encre, ladite encre libérant un colorant pour impression par jet d'encre contenant au moins un agent réducteur et un composé amine.

2. Tête à jet d'encre selon la revendication 1, dans laquelle ledit agent réducteur est un agent réducteur à base de soufre.

3. Tête à jet d'encre selon la revendication 2, dans laquelle ledit agent réducteur de soufre est de la rongalite.

4. Tête à jet d'encre selon l'une quelconque des revendications 1 à 3, dans laquelle ledit composé amine est un composé alcool amine.

5. Tête à jet d'encre selon l'une quelconque des revendications 1 à 4, dans laquelle le pH de l'encre à libération de colorant est compris dans une plage de 9,5 à 11,0.

6. Tête à jet d'encre selon l'une quelconque des revendications 1 à 5, contenant au moins de la rongalite en tant que ledit agent réducteur et du tri-éthanolamine en tant que ledit composé amine.

7. Tête à jet d'encre selon l'une quelconque des revendications 1 à 6, dans laquelle ladite tête comprend, en outre, un mécanisme d'essuyage de la surface de tête.
